# EUROPÄISCHE PATENTANMELDUNG

(11) **EP 1 364 976 A1**
(43) Veröffentlichungstag der Anmeldung: **26.11.2003**
(21) Anmeldenummer: 03008412.3
(22) Anmeldetag: 11.04.2003
(51) Int. Cl.: C08F 210/02

(54) **Ethylenterpolymerwachse, Verfahren zu ihrer Herstellung und ihre Verwendung**

(30) Priorität: 15.05.2002 DE 10221804
(71) Anmelder: BASF Aktiengesellschaft, 67056 Ludwigshafen (DE)
(72) Erfinder: Fechtenkötter, Andreas, Dr., 67063 Ludwigshafen (DE); Zeitz, Katrin, Dr., 68239 Mannheim (DE); Ehle, Michael, Dr., 67071 Ludwigshafen (DE); Deckers, Andreas, Dr., 55234 Flomborn (DE); Becker, Stefan, Dr., 68167 Mannheim (DE)

(57) **Zusammenfassung**

Ethylenterpolymerwachse, enthaltend als Monomerbausteine 35 bis 95 Gew.-% Ethylen,
0,1 bis 40 Gew.-% mindestens eines Esters der allgemeinen Formel I 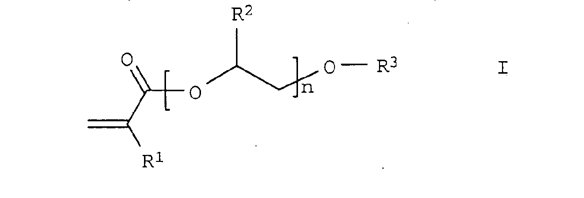 wobei R¹ gewählt wird aus Wasserstoff, C₁-C₁₀-Alkyl, C₃-C₁₂-Cycloalkyl oder C₆-C₁₄-Aryl
- R²: gleich oder verschieden sind und ausgewählt aus Wasserstoff und C₁-C₁₀-Alkyl,
- R³: gewählt wird aus C₁-C₁₀-Alkyl, C₃-C₁₂-Cycloalkyl oder C₆-C₁₄-Aryl und
- n: eine ganze Zahl zwischen 2 und 100 ist,
sowie 0,1 bis 25 Gew.-% mindestens einer Carbonsäure der allgemeinen Formel II 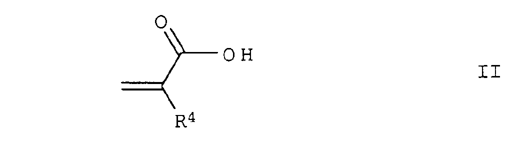 wobei R⁴ gewählt wird aus Wasserstoff, C₁-C₁₀-Alkyl, C₃-C₁₂-Cycloalkyl oder C₆-C₁₄-Aryl.

## Beschreibung

Die vorliegende Erfindung betrifft Ethylenterpolymerwachse, enthaltend als Monomerbausteine
35 bis 95 Gew.-% Ethylen,
0,1 bis 40 Gew.-% mindestens eines Esters der allgemeinen Formel I 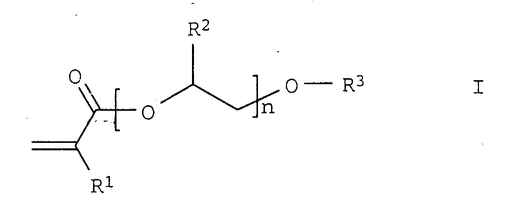 wobei
- R¹: gewählt wird aus Wasserstoff, C₁-C₁₀-Alkyl, C₃-C₁₂-Cycloalkyl oder C₆-C₁₄-Aryl
- R²: gleich oder verschieden sind und ausgewählt aus Wasserstoff und C₁-C₁₀-Alkyl,
- R³: gewählt wird aus C₁-C₁₀-Alkyl, C₃-C₁₂-Cycloalkyl oder C₆-C₁₄-Aryl und
- n: eine ganze Zahl von 2 bis 100 ist,
sowie 0,1 bis 25 Gew.-% mindestens einer Carbonsäure der allgemeinen Formel II 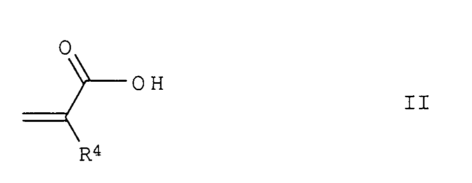 wobei R⁴ gewählt wird aus Wasserstoff, C₁-C₁₀-Alkyl, C₃-C₁₂-Cycloalkyl oder C₆-C₁₄-Aryl.

Dispergierbare, speziell emulgierbare Wachse auf Basis von Ethylencopolyerisaten und Ethylenterpolymerisaten haben ein breites Anwendungsgebiet, beispielsweise als Komponente in Bodenpflegemitteln. Weitere Verwendungsmöglichkeiten sind Schmelzkleber für Metalle, Keramik, Holz, Glas, Leder oder Kunststoffe, weiterhin Haftvermittler für Beschichtungen aus Polyolefinen oder Kautschuken oder Zusätze zu Anstrichmitteln. Die wirtschaftliche Bedeutung von Ethylencopolyerisaten und Ethylenterpolymerisaten ist nicht zuletzt auf den günstigen Preis zurück zu führen.

An Bodenpflegemittel, beispielsweise Bohnerwachse, werden in der Regel hohe Anforderungen gestellt. Neben einem günstigen Preis sollen sie eine gute Lagerstabilität aufweisen, außerdem sollen sie sich leicht applizieren lassen. Die Böden sollen einen schönen Glanz aufweisen und möglichst lange sicher begehbar sein. In der Regel versucht man, diese Eigenschaften durch das eingesetzte emulgierbare Ethylenpolymerisat einzustellen, das als Komponente im Bodenpflegemittel eingesetzt wird.

Bei den technisch bekannten emulgierbaren Ethylenpolymerisaten handelt es sich um sauerstoffhaltige Ethylenpolymerisate, bei denen der Sauerstoff auf verschiedene Arten eingeführt werden kann. Ein bekanntes Zweistufenverfahren besteht aus der Herstellung von sauerstofffreien Polyethylenwachsen durch radikalische oder Ziegler-Natta-Polymerisation von Ethylen, gefolgt von der Oxidation der erhaltenen Polyethylenwachse durch Luft oder Peroxide oder reinem Sauerstoff oder Gemischen derselben lassen sich sogenannte Oxidat-Wachse erhalten. Dieses letztgenannte Verfahren weist jedoch technische Nachteile auf.

Durch die Oxidation eines Polyethylens wird das Molekulargewicht der zugrundeliegenden Polyethylenketten verringert, was nachteilig für die Härte des Produktes ist. Außerdem ist die Herstellung von Oxidat-Wachsen stets ein Zweistufen-Prozess, was zu zusätzlichem Investitionsbedarf führt (vgl. beispielsweise: *Ullmann's Encyclopedia of Industrial Chemistry,* 5. Auflage, Stichworte: Waxes, Bd. A 28, S. 146 ff., Verlag Chemie Weinheim, Basel, Cambridge, New York, Tokio, **1996**).

Aus DE-A 100 08 931 sind Copolymerisate von 90 bis 95 Gew.-% Ethylen, 4 bis 10 Gew.-% einer oder mehrerer C₃-C₁₂-Alkencarbonsäuren und 0 bis 1,2 Gew.-% eines oder mehrerer tertiärer Ester der entsprechenden C₃-C₁₂-Alkencarbonsäuren bekannt, wobei die Wachse eine kinematische Schmelzviskosität von 800 bis 3000 mm²/s aufweisen, gemessen bei 120°C. Sie werden durch Polymerisation von Ethylen mit einem oder mehreren tertiären Estern von C₃-C₁₂-Alkencarbonsäuren unter Hochdruckbedingungen gewonnen, wobei die Temperatur im Verlauf der Polymerisation um weniger als 5°C schwankt.

Die Eigenschaften der aus den beschriebenen Copolymerisaten herstellbaren Bodenpflegemittel lässt sich jedoch noch verbessern.

Aus EP 0 224 029 sind hochmolekulare kautschukelastische Copolymerisate des Ethylens mit Polyalkylenglykol(meth)acrylsäureestern bekannt, die aus 30 bis 80 Gewichtsteilen Ethylen, 2 bis 40 Gewichtsteilen (Meth)acrylsäureestern und 0 bis 40 Gewichtsteilen einer α,β-ungesättigten Carbonsäure, eines Carbonsäureanhydrids oder eines Carbonsäureamids bekannt und Schmelzindices von unter 1000g/10 min aufweisen, gemessen nach DIN 53735 bei 190°C und 2,16 kp Belastung. Sie haben elastomere Eigenschaften und sind gegen Ozon stabil. Sie sind wasserdispergierbar und eignen sich gut als Komponente von Klebern, aber als Komponente in Bodenpflegemitteln sind sie ungeeignet.

Es bestand die Aufgabe,
- neue Ethylenterpolymerisate bereit zu stellen,
- ein Verfahren zur Herstellung der neuen Ethylenterpolymerisate bereit zu stellen, und insbesondere
- neue Bodenpflegemittel bereit zu stellen, die gegenüber dem Stand der Technik verbesserte Eigenschaften aufweisen.

Demgemäß wurden die eingangs definierten Ethylenterpolymerisate gefunden.

Die erfindungsgemäßen Ethylenterpolymerisate sind wachsartige Terpolymerisate aus Ethylen und mindestens 2 Comonomeren, wobei die Wachse üblicherweise eine Schmelzviskosität im Bereich von 20 bis 70.000 mm²/s aufweisen, bevorzugt von 300 bis 55.000 mm²/s, gemessen bei 120°C nach DIN 51562. Ihre Säurezahl beträgt 1 bis 150, bevorzugt 5 bis 100 mg KOH/g Wachs, bestimmt nach DIN 53402; insbesondere bis 80 mg KOH/g Wachs. Die Schmelzpunkte liegen im Bereich von 60 bis 110°C, bevorzugt im Bereich von 80 bis 109°C, bestimmt durch DSC nach DIN 51007. Die Dichte beträgt üblicherweise 0,89 bis 0,99 g/cm³, bevorzugt 0,92 bis 0,96 g/cm³, bestimmt nach DIN 53479.

Erfindungsgemäß setzen sich die erfindungsgemäßen eingesetzten Ethylenterpolymerwachse zusammen aus den folgenden Monomerbausteinen zusammen:
35 bis 95 Gew.-% Ethylen, bevorzugt 40 bis 90 Gew.-%,
0,1 bis 40 Gew.-% mindestens eines Esters der allgemeinen Formel I 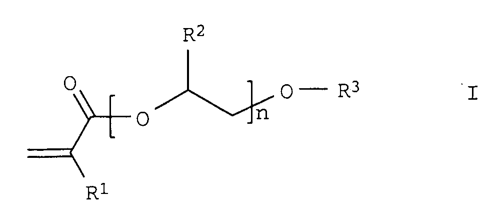
wobei R¹ gewählt wird aus Wasserstoff, C₁-C₁₀-Alkyl, C₃-C₁₂-Cycloalkyl oder C₆-C₁₄-Aryl
- R²: gleich oder verschieden sind und ausgewählt aus Wasserstoff und C₁-C₁₀-Alkyl,
- R³: gewählt wird aus C₁-C₁₀-Alkyl, C₃-C₁₂-Cycloalkyl oder C₆-C₁₄-Aryl und
- n: eine ganze Zahl von 2 und 100 ist, bevorzugt von 10 bis 50,
sowie 0,1 bis 25 Gew.-%, bevorzugt bis 20 Gew.-% mindestens einer Carbonsäure der allgemeinen Formel II 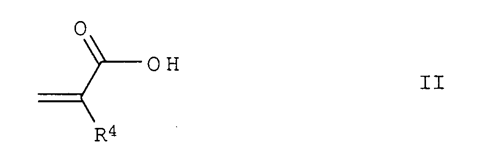 wobei R⁴ gewählt wird aus Wasserstoff, C₁-C₁₀-Alkyl, C₃-C₁₂-Cycloalkyl oder C₆-C₁₄-Aryl.

Dabei sind in Formel I die Variablen R¹ und R³ unabhängig voneinander gewählt aus
- Wasserstoff,
- C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
und R² ist jeweils gleich oder verschieden und gewählt aus
- C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; bevorzugt C₁-C₄-Alkyl wie Methyl, Ethyl, n-Propyl, iso-Propyl, n-Butyl, iso-Butyl, sec.-Butyl und tert.-Butyl, insbesondere Methyl oder Ethyl;
- oder Wasserstoff.

Ganz besonders bevorzugt sind R¹ und R³ gewählt aus Wasserstoff oder Methyl, und R² ist ganz besonders bevorzugt Wasserstoff, Methyl oder Ethyl.

Bei höheren Werten von n lassen sich einzelne Ester der allgemeinen Formel I in vielen Fällen nicht rein darstellen. Sie fallen als Gemische an. Unter n sind im Sinne der vorliegenden Erfindung daher für Werte von n > 10, insbesondere n > 15 die Zahlenmittel zu verstehen.

Unter Carbonsäuren sind ungesättigte Carbonsäuren der allgemeinen Formel II zu verstehen, wobei R⁴ in Formel II gewählt wird aus
- Wasserstoff,
- C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Bevorzugt sind Acrylsäure und Methacrylsäure. Ganz besonders bevorzugt ist Methacrylsäure.

Vorzugsweise sind in den erfindungsgemäßen Ethylenterpolymeren R¹ und R⁴ jeweils gleich.

Die Monomerbausteine sind in den erfindungsgemäßen Polymeren vorzugsweise statistisch verteilt.

In einer bevorzugten Ausführungsform der vorliegenden Erfindung enthalten die erfindungsgemäßen Ethylenterpolymerwachse zwei oder mehrere Carbonsäuren der allgemeinen Formel II als Monomerbausteine, beispielsweise in molaren Verhältnissen von 1:10 bis 10:1, bevorzugt 1:3 bis 3:1. Ganz besonders bevorzugt enthalten die erfindungsgemäßen Ethylenterpolymerwachse Acrylsäure und Methacrylsäure als Monomerbausteine. Solche erfindungsgemäßen Polymerisate sind Ethylenquaterpolymerwachse, zählen aber im Sinne der vorliegenden Erfindung ebenfalls zu den erfindungsgemäßen Ethylenterpolymerwachsen.

Ein weiterer Gegenstand der vorliegenden Erfindung ist ein Verfahren zur Herstellung der erfindungsgemäßen Ethylenterpolymerwachse.

Die Herstellung der erfindungsgemäßen Ethylenterpolymerwachse kann in gerührten Hochdruckautoklaven oder in Hochdruckrohrreaktoren erfolgen. Die Herstellung in gerührten Hochdruckautoklaven ist bevorzugt. Die für das erfindungsgemäße Verfahren angewandten gerührten Hochdruckautoklaven sind an sich bekannt, eine Beschreibung findet man in *Ullmann's Encyclopedia of Industrial Chemistry,* 5. Auflage, Stichworte: Waxes, Bd. A 28, S. 146 ff., Verlag Chemie Weinheim, Basel, Cambridge, New York, Tokio, **1996.** Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in *Ullmann's Encyclopedia of Industrial Chemistry,* 5. Auflage, Stichworte: Waxes, Bd. A 28, S. 146 ff., Verlag Chemie Weinheim, Basel, Cambridge, New York, Tokio, **1996**.

Geeignete Druckbedingungen für die Polymerisation sind 500 bis 4000 bar, bevorzugt 1500 bis 2500 bar. Die Reaktionstemperaturen liegen im Bereich von 170 bis 300°C, bevorzugt im Bereich von 200 bis 280°C.

Das erfindungsgemäße Verfahren kann man in Gegenwart eines Reglers durchführen. Als Regler verwendet man beispielsweise Wasserstoff oder einen aliphatischen Aldehyd oder ein aliphatisches Keton der allgemeinen Formel IV 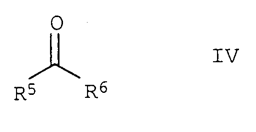 oder Mischungen derselben.

Dabei sind die Reste R⁵ und R⁶ gleich oder verschieden und ausgewählt aus
- Wasserstoff;
- C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;

In einer besonderen Ausführungsform sind die Reste R⁵ und R⁶ miteinander unter Bildung eines 4- bis 13-gliedrigen Rings kovalent verbunden. So können R⁵ und R⁶ beispielsweise gemeinsam sein:
-(CH₂)₄-, -(CH₂)₅-, -(CH₂)₆, -(CH₂)₇-, -CH(CH₃)-CH₂-CH₂-CH(CH₃)-oder
-CH(CH₃)-CH₂-CH₂-CH₂-CH(CH₃)-.

Die Verwendung von Propionaldehyd (R⁵ = H, R⁶ = C₂H₅) oder Ethylmethylketon (R⁵ = CH₃, R⁶ = C₂H₅) als Regler ist ganz besonders bevorzugt.

Weitere sehr gut geeignete Regler sind alkylaromatische Verbindungen, beispielsweise Toluol, Ethylbenzol oder ein oder mehrere Isomere des Xylols.

Weitere gut geeignete Regler sind unverzweigte aliphatische Kohlenwasserstoffe wie beispielsweise Propan geeignet. Besonders gute Regler sind verzweigte aliphatische Kohlenwasserstoffe mit tertiären H-Atomen, beispielsweise Isobutan, Isopentan, Isooctan oder Isododekan (2,2,4,6,6-Pentamethylheptan). Ganz besonders geeignet ist Isododekan. Als weitere zusätzliche Regler können höhere Olefine wie beispielsweise Propylen eingesetzt werden.

Die Menge an verwendetem Regler entspricht den für das Hochdruckpolymerisationsverfahren üblichen Mengen.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Als Radikalstarter verwendet man ein oder mehrere Peroxide, ausgewählt aus den kommerziell erhältlichen Substanzen
- Didekanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.Butylperoxydiethylacetat, tert.Butylperoxydiethylisobutyrat, 1,4-Di(tert.-butylperoxycarbo)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperox)butan oder tert.-Butylperoxacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Ditert.-butylperoxid, 1,3-Diisopropylmonohydroperoxid, Cumolhydroperoxid oder tert.-Butylhydroperoxid; oder
- dimere oder trimere Ketonperoxide der allgemeinen Formel V a bis V c.

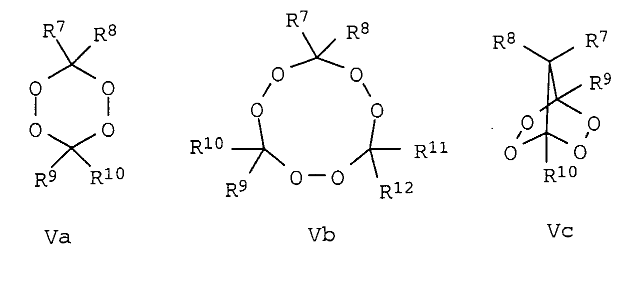

Dabei sind die Reste R⁷ bis R¹² gleich oder verschieden und ausgewählt aus
- C₁-C₈-Alkyl wie Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, n-Heptyl, n-Octyl; bevorzugt lineares C₁-C₆-Alkyl wie Methyl, Ethyl, n-Propyl, n-Butyl, n-Pentyl, n-Hexyl, besonders bevorzugt lineares C₁-C₄-Alkyl wie Methyl, Ethyl, n-Propyl oder n-Butyl, ganz besonders bevorzugt ist Ethyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Peroxide der allgemeinen Formeln V a bis V c sowie Verfahren zu ihrer Herstellung sind aus EP-A 0 813 550 bekannt.

Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Die Radikalstarter werden in für Polymerisationen üblichen Mengen dosiert.

Als Monomere verwendet man Ethylen, mindestens einen Ester der allgemeinen Formel I und mindestens eine Carbonsäure der allgemeinen Formel II. Ester der allgemeinen Formel I sind durch Umsetzung einer Carbonsäure der allgemeinen Formel VI und einem Alkohol der allgemeinen Formel VII 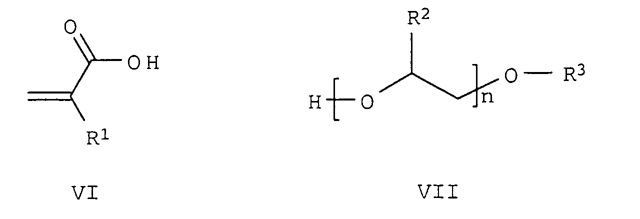 durch an sich bekannte Veresterungs- oder Umesterungsreaktionen hergestellt werden.

Bei der Veresterung anfallende Gemische aus I und VI können bevorzugt als Comonomerengemisch im erfindungsgemäßen Verfahren eingesetzt werden.

Das erfindungsgemäße Verfahren wird bevorzugt in Anwesenheit von Lösemitteln durchgeführt, wobei Mineralöle und andere Lösungsmittel, die in geringen Anteilen im erfindungsgemäßen Verfahren zugegen sind und beispielsweise zum Phlegmatisieren des oder der Radikalstarter verwendet wurden, im Sinne der vorliegenden Erfindung als Lösemittel für das erfindungsgemäße Verfahren gelten. Weitere Lösemittel sind beispielsweise aromatische Lösemittel, die als Lösemittel bei der Herstellung-von Estern der allgemeinen Formel I eingesetzt werden und nach Abschluss der Veresterung bzw. Umesterung nicht vollständig entfernt wurden. Besonders bevorzugte aromatische Kohlenwasserstoffe sind Toluol, Xylol-Isomere sowie Ethylbenzol.

Die Monomere werden üblicherweise gemeinsam oder getrennt dosiert. Das Mengenverhältnis bei der Dosierung entspricht üblicherweise nicht genau dem Verhältnis der Monomerbausteine in den erfindungsgemäßen Ethylenterpolymerwachsen, weil Ester der allgemeinen Formel I und Carbonsäuren der allgemeinen Formel II leichter in die erfindungsgemäßen Ethylenterpolymerwachse eingebaut werden als Ethylen.

Die Dosierung des oder der Monomere kann gemeinsam mit oder getrennt von Radikalstartern und ggf. mitverwendeten Reglern erfolgen. Man kann auch den oder die Regler zunächst auf einen sogenannten Zwischendruck, das sind 180 bis 300 bar vorverdichten und anschließend in den Hochdruckautoklaven bzw. den Hochdruckrohrreaktor dosieren. Vorzugsweise dosiert man den oder die Radikalstarter ohne Vorverdichtung in den Hochdruckautoklaven bzw.den Hochdruckrohrreaktor.

Die erfindungsgemäßen Ethylenterpolymerwachse lassen sich vorzüglich dispergieren; insbesondere lassen sie sich im geschmolzenen Zustand besonders gut emulgieren. Ein Gegenstand der vorliegenden Erfindung sind daher Dispersionen, insbesondere wässrige Dispersionen, enthaltend die erfindungsgemäßen Ethylenterpolymerwachse.

Die erfindungsgemäßen Dispersionen enthalten vorzugsweise 1 bis 40 Gew.-% ein oder mehrere erfindungsgemäße Ethylenterpolymerwachse, 60 bis 98 Gew.-% Wasser, eine oder mehrere basisch wirkende Substanzen, beispielsweise Hydroxide und/oder Carbonate von Alkalimetallen, Ammoniak, organische Amine wie beispielsweise Triethylamin, Diethylamin, Ethylamin, Trimethylamin, Dimethylamin, Methylamin, Ethanolamin, Diethanolamin, Triethanolamin, Methyldiethanolamin, n-Butyldiethanolamin, und gegebenenfalls weitere Bestandteile, beispielsweise Ethylenglykol, Diethylenglykol oder weitere Dispergiermittel.

Die erfindungsgemäßen Dispersionen weisen üblicherweise einen basischen pH-Wert auf, bevorzugt pH-Werte von 7,5 bis 14, besonders bevorzugt von 8 oder höher und ganz besonders bevorzugt von 9 oder höher.

Ein weiterer Gegenstand der vorliegenden Erfindung ist die Verwendung der erfindungsgemäßen Ethylenterpolymerwachse bzw. der erfindungsgemäßen Dispersionen als Bodenpflegemittel oder als Komponente in Bodenpflegemitteln.

Die Fähigkeit der erfindungsgemäßen Dispersionen zur Bildung farbloser, klarer, glänzender Filme lässt sich zur Verwendung in Bodenpflegemitteln nutzen. Durch sie lässt sich weiterhin die Rutschfestigkeit und die Begehbarkeit von Böden verbessern.

Ein typisches erfindungsgemäßes Bodenpflegemittel besteht aus
- 10 bis 20 Gewichtsteilen der erfindungsgemäßen Dispersionen, die Elastizität, schmutzabweisendes Verhalten und Glanz des zu pflegenden Bodens bedingen,
- 0,5 bis 5, bevorzugt 2 bis 3 Gewichtsteilen Diethylenglykol,
- 0,1 bis 10, bevorzugt 1 bis 2 Gewichtsteilen Ethylenglykol,
- 0,1 bis 10, bevorzugt 1 bis 2 Gewichtsteilen eines permanenten Weichmachers, wobei als Weichmacher beispielsweise Phosphorsäuretrialkylester verwendet werden, besonders bevorzugt ist Tri-(n-butoxyethyl)phosphat,
- 0,1 bis 5 Gewichtsteile, bevorzugt 0,5 bis 1,5 Gewichtsteilen eines Netzverlaufsmittels, wobei als Netzverlaufsmittel beispielsweise fluorierte Tenside, beispielsweise FC-129 der Firma 3M verwendet werden,
- 20 bis 30 Gewichtsteile einer Dispersion aus Polystyrol/Acrylat als Trägermaterial. Ein bevorzugtes Beispiel ist Poligen® MF750.

Die Herstellung des erfindungsgemäßen Bodenpflegemittels erfolgt durch Vermischen der Komponenten beispielsweise in einem Eimer, wobei ein 5-minütiges Zusammenrühren im Allgemeinen ausreichend ist.

Ein weiterer Gegenstand der vorliegenden Erfindung ist die Verwendung der erfindungsgemäßen Ethylenterpolymerwachse als Komponente in Lederhilfsmitteln sowie Lederhilfsmittel, enthaltend die erfindungsgemäßen Ethylenterpolymerwachse. Unter Lederhilfsmitteln sind insbesondere die emulgierbaren Fettungsmittel zu verstehen. Die erfindungsgemäßen emulgierbaren Fettungsmittel enthalten als aktive Komponenten
- natürliche, modifizierte oder synthetische Fette,
- gegebenenfalls weitere kationische Komponenten wie beispielsweise Ammoniumsalze,
- gegebenenfalls weitere Emulgatoren
und außerdem Wasser.

Die erfindungsgemäßen Lederhilfsmittel zeichnen sich durch ausgezeichnete Haltbarkeit aus und durch eine geringe Neigung zur Bildung von Fettausschlägen. Wendet man die erfindungsgemäßen Lederhilfsmittel nach an sich bekannten Methoden zur Fettung von Leder an, so erhält man Leder mit einem angenehm schmalzigen Griff. Außerdem zeigt sich, dass die Verwendung der erfindungsgemäßen Lederhilfsmittel bei der Lederherstellung das Leder weich macht, seine Fülle steigert und zur Erhöhung der Schutzwirkung gegen Nässe, Schmutz und unerwünschte chemische Einflüsse führt.

Ein weiterer Gegenstand der vorliegenden Erfindung ist die Verwendung der erfindungsgemäßen Ethylenterpolymerwachse als Komponente von Bauchemikalien sowie Bauchemikalien, enthaltend die erfindungsgemäßen Ethylenterpolymerwachse. Unter Bauchemikalien sind beispielsweise Betonverflüssiger zu nennen. Weitere Bauchemikalien im Sinne der vorliegenden Erfindung sind Schalöle, das sind Öle, mit denen Verschalungen beschichtet werden, in die man anschließend beispielsweise Beton gießt.

Weiterhin lassen sich die erfindungsgemäßen Ethylenterpolymerwachse als Emulgator, beispielsweise als Emulsionshilfsmittel oder Emulsionsverbesserer, zur Beschichtung von Agrochemikalien wie beispielsweise Düngemitteln, als Thixothropiehilfsmittel, als MDFI in Brennstoffölen und als Mattierungsmittel verwenden.

Ein weiterer Gegenstand der vorliegenden Erfindung ist die Verwendung der erfindungsgemäßen Ethylenterpolymerwachse als Dispergierhilfsmittel für die Dispergierung von hydrophoben Stoffen in wässrigen Medien. Unter hydrophoben Stoffen werde dabei Stoffe mit einer Löslichkeit von bis zu 0,5 g/l Wasser unter Normalbedingungen verstanden.

Die Erfindung wird durch Arbeitsbeispiele erläutert.

### Arbeitsbeispiele

### 1. Herstellung erfindungsgemäßer Ethylenterpolymerwachse

Ethylen, Polyethylenglykolmethacrylatmethylether (R¹ = R³ = CH₃; R² = H, n = 21) und Methacrylsäure (R⁴ = CH₃) wurden unter Zusatz von Toluol als Lösemittel und einer 50 Gew.-% Lösung von Propionaldehyd in Isododekan als Regler in einem Hochdruckautoklaven polymerisiert, wie er in der Literatur beschrieben ist (M. Buback *et al., Chem. Ing. Tech.* **1994,** 66, 510). Hierzu wurden Ethylen und das Comonomerengemisch aus Polyethylenglykolmethacrylatmethylether und Methacrylsäure, dem ca. 1000 ml·h⁻¹ einer Initiatorlösung, bestehend aus tert.-Butylperoxypivalat (0,1 mol·l⁻¹), gelöst in Isododekan, zugesetzt wurde, unter dem Reaktionsdruck von 1700 bar eingespeist.

Der Peroxidverbrauch betrug etwa 1 bis 15 g/g Ethylenterpolymerwachs. Die Polymerisationstemperatur betrug 220±5 °C. In Tabelle 1 sind die Polymerisationsbedingungen und in der Tabelle 2 die analytischen Daten der erhaltenen erfindungsgemäßen Ethylenterpolymerwachse zusammengestellt.

Der Gehalt an Ethylen, Polyethylenglykolmethacrylatmethylether und Methacrylsäure in den erfindungsgemäßen Ethylenterpolymerwachsen wurde NMR-spektroskopisch bzw. durch Titration (Säurezahl) bestimmt. Die Säurezahl der Polymerisate wurde titrimetrisch nach DIN 53402 bestimmt. Der KOH-Verbrauch entspricht dem Methacrylsäure-Gehalt im Polymerisat.

**Tabelle 1**

| Herstellung der erfindungsgemäßen Ethylenterpolymerwachse | | | | | | | |
|---|---|---|---|---|---|---|---|
| Nr. | Zulauf | | | Davon [jeweils g·h⁻¹] Polymer | | | |
| | Ethylen [g·h⁻¹] | Comonomere + Toluol [ml·h⁻¹] | Propionaldehyd + Isododekan [ml·h⁻¹] | PEMM | Methacrylsäure | Toluol | [g·h⁻¹] |
| 1.1 | 12000 | 250 | 670 | 178,0 | 42,4 | 29,6 | 2550 |
| 1.2 | 12000 | 316 | 640 | 225,0 | 53,6 | 37,4 | 2600 |
| 1.3 | 12440 | 400 | 640 | 284,8 | 67,9 | 47,3 | 2700 |
| 1.4 | 12870 | 588 | 600 | 418,7 | 99,8 | 69,5 | 2940 |
| 1.5 | 12700 | 780 | 580 | 555,4 | 132,3 | 92,2 | 3025 |
| 1.6 | 12250 | 1000 | 600 | 712,1 | 169,7 | 118,2 | 3070 |
| 1.7 | 12410 | 1172 | 560 | 834,6 | 198,8 | 138,6 | 3200 |
| 1.8 | 12210 | 1360 | 500 | 968,4 | 230,7 | 160,8 | 3280 |

Verwendete Abkürzungen: Tl = Toluol; PEMM: Polyethylenglykolmethacrylatmethylether.

Die analytischen Daten der Ethylenterpolymerwachse finden sich in Tabelle 2.

**Tabelle 2:**

| Analytische Daten der erfindungsgemäßen Ethylenterpolymerwachse | | | | | | | |
|---|---|---|---|---|---|---|---|
| Nr. | Zusammensetzung NMR/titrimetrisch | | | Säurezahl | Q(23°C) | ν(120°C) | Schmp. |
| | Ethylen [Gew.-%] | PEMM [Gew.-%] | Methyacrylsäure [Gew.-%] | [mg KOH g⁻¹] | [g cm⁻³] | [mm² s⁻¹] | [°C] |
| 1.1 | 94,0 | 4,7 | 1,3 | 8,7 | 0,9455 | 1170 | 108,1 |
| 1.2 | 92,5 | 6,0 | 1,5 | 9,6 | 0,9427 | 1280 | 107,5 |
| 1.3 | 91,0 | 7,1 | 1,9 | 12,6 | 0,9469 | 1240 | 106,3 |
| 1.4 | 87,5 | 10,0 | 2,5 | 16,0 | 0,9488 | 1220 | 104,7 |
| 1.5 | 84,0 | 12,8 | 2,9 | 18,6 | 0,9507 | 1190 | 103,6 |
| 1.6 | 81,4 | 15,9 | 2,7 | 17,3 | 0,9516 | 1280 | 105,7 |
| 1.7 | 77,4 | 18,2 | 4,4 | 28,9 | 0,9653 | 1100 | 100,9 |
| 1.8 | 74,7 | 20,9 | 4,4 | 28,4 | 0,9665 | 1210 | 101,9 |

Die Schmelzviskosität wurde mit Hilfe von DSC nach DIN 51562 bestimmt, die Schmelzpunkte mit Hilfe von DSC nach DIN 51007.

### 2. Herstellung einer erfindungsgemäßen Dispersion

In einem 2-Liter-Rührtopf mit Ankerrührer und Rückflusskühler wurden 933 g Wasser vorgelegt und auf 90°C vorgeheizt. Innerhalb von 30 Minuten wurden 400 g des erfindungsgemäßen Ethylenterpolymerwachses aus Beispiel 1.8 portionsweise zugefügt und die Mischung bis zum Rückfluss erhitzt. Anschließend wurden 22,72 g 50 Gew.-% wässrige KOH unter starkem Rühren zugegeben. Schließlich wurden noch 267 g Wasser zugefügt und die entstandene Dispersion auf Raumtemperatur abgekühlt. Der pH-Wert der so erhaltenen Dispersion betrug 11; der Feststoffgehalt 24,3 Gew.-% und die mittlere Teilchengröße 180-190 nm, bestimmt nach ISO 13321 mit einem Gerät Autosizer IIC (Fa. Malvern) bei folgenden Parametern:

| | |
|---|---|
| Messtemperatur | 23,0°C |
| Messzeit | 200 Sekunden (10 Zyklen á 20 s ) |
| Streuwinkel | 90° |
| Wellenlänge Laser | 633 nm (HeNe) |

### 3. Herstellung erfindungsgemäßer Quaterpolymerwachse

Ethylen, Polyethylenglykolmethacrylatmethylether (R¹ = R³ = CH₃; R² = H, n = 21), Acrylsäure (R⁴ = H) als 20 Gew.-% Lösung in Isododekan und Methacrylsäure (R⁴ = CH₃) wurden unter Zusatz von Toluol als Lösemittel und Propionaldehyd als Regler in einem Hochdruckautoklaven polymerisiert, wie er in der Literatur beschrieben ist (M. Buback *et al., Chem. Ing. Tech.* **1994,** 66, 510). Hierzu wurden Ethylen und das Comonomerengemisch aus Methacrylsäure und Polyethylenglykolmethacrylatmethylether, gelöst in Toluol, und Methacrylsäure, gelöst in Isododekan, dosiert. Weiterhin wurden ca. 1000 ml·h⁻¹ einer Initiatorlösung, bestehend aus tert.-Butylperoxypivalat (0,02 bis 0,2 mol·l⁻¹), gelöst in Isododekan, unter dem Reaktionsdruck von 1700 bar eingespeist. Die Polymerisationstemperatur betrug 220±5 °C. In Tabelle 3 sind die Polymerisationsbedingungen und in der Tabelle 4 die analytischen Daten der erhaltenen erfindungsgemäßen Ethylenquaterpolymerwachsen zusammengestellt.

Der Peroxidverbrauch betrug etwa 1 bis 15 g/g Quaterpolymerwachs. Der Gehalt an Ethylen, Acrylsäure, Polyethylenglykolmethacrylatmethylether und Methacrylsäure in den erfindungsgemäßen Ethylenquaterpolymerwachsen wurde NMR-spektroskopisch bzw. durch Titration (Säurezahl) bestimmt. Die Säurezahl der Polymerisate wurde titrimetrisch nach DIN 53402 bestimmt. Der KOH-Verbrauch entspricht dem Gehalt an Acrylsäure und Methacrylsäure im Polymerisat.

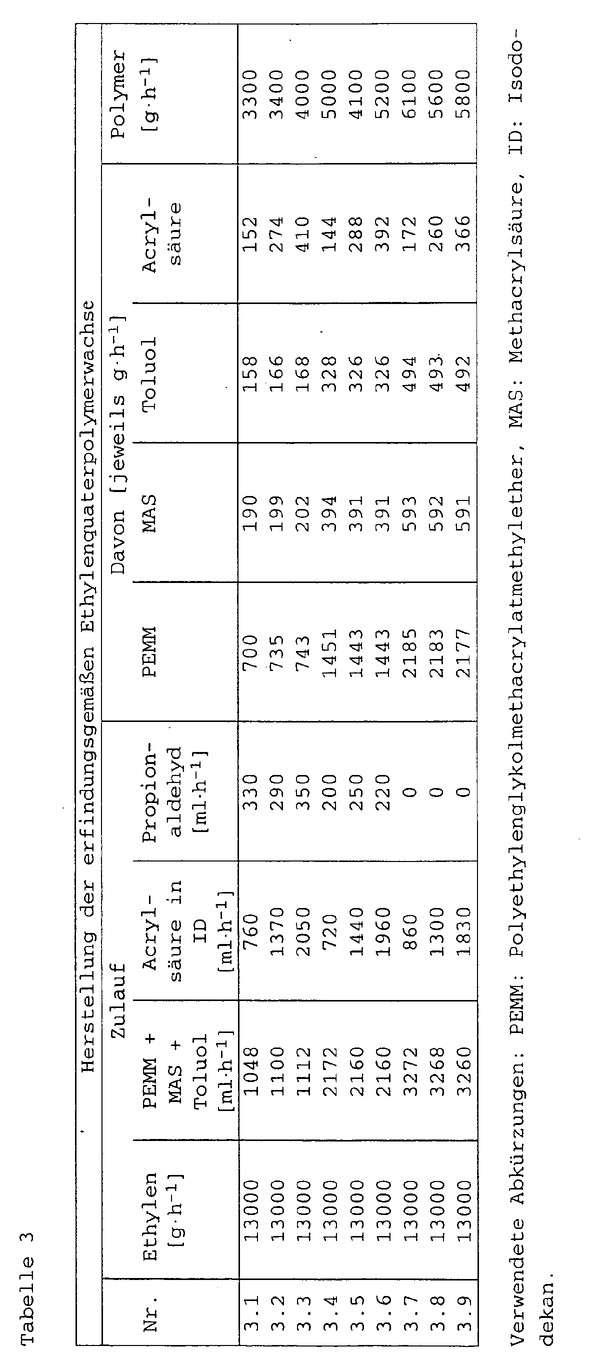

**Tabelle 4:**

| Analytische Daten der erfindungsgemäßen Ethylenquaterpolymerwachse | | | | | | | |
|---|---|---|---|---|---|---|---|
| Nr. | Zusammensetzung NMR/titrimetrisch | | | Säurezahl | Q (23°C) | ν(120°C) | Schmp. |
| | Ethylen [Gew.-%] | PEMM [Gew.-%] | MAS + Acrylsäure [Gew.-%] | [mg KOH g⁻¹] | [g cm⁻³] | [mm² s⁻¹] | [°C] |
| 3.1 | 78,4 | 14,94 | 6,65 | 47 | 0,964 | 1250 | 98 |
| 3.2 | 76,5 | 14,59 | 8,88 | 63 | 0,964 | 1250 | 93,6 |
| 3.3 | 75,1 | 14,42 | 10,44 | 74 | 0,964 | 1050 | 91,3 |
| 3.4 | 68,7 | 23,80 | 7,51 | 53 | 0,981 | 920 | 92,1 |
| 3.5 | 67,5 | 23,45 | 9,06 | 64 | 0,972 | 830 | 91,5 |
| 3.6 | 66,1 | 22,90 | 11,02 | 78 | 0,983 | 1030 | 80 - 90 |
| 3.7 | 60,6 | 30,53 | 8,91 | 63 | 0,990 | 1120 | 70 - 90 |
| 3.8 | 63,4 | 26,98 | 9,58 | 68 | 0,987 | 1120 | 65 - 90 |
| 3.9 | 62,8 | 26,74 | 10,42 | 74 | 0,983 | 660 | 65 - 85 |

## Patentansprüche

1. Ethylenterpolymerwachse, enthaltend als Monomerbausteine
35 bis 95 Gew.-% Ethylen,
0,1 bis 40 Gew.-% mindestens eines Esters der allgemeinen Formel I 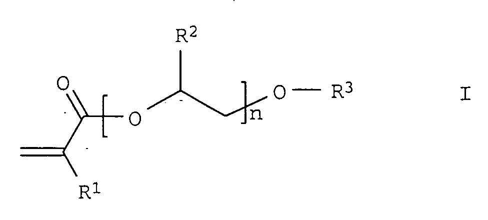 wobei
R¹ gewählt wird aus Wasserstoff, C₁-C₁₀-Alkyl, C₃-C₁₂-Cycloalkyl oder C₆-C₁₄-Aryl
R² gleich oder verschieden sind und ausgewählt aus Wasserstoff und C₁-C₁₀-Alkyl,
R³ gewählt wird aus C₁-C₁₀-Alkyl, C₃-C₁₂-Cycloalkyl oder C₆-C₁₄-Aryl und
n eine ganze Zahl von 2 bis 100 ist,
sowie 0,1 bis 25 Gew.-% mindestens einer Carbonsäure der allgemeinen Formel II 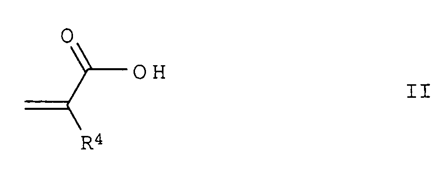 wobei R⁴ gewählt wird aus Wasserstoff, C₁-C₁₀-Alkyl, C₃-C₁₂-Cycloalkyl oder C₆-C₁₄-Aryl.

2. Ethylenterpolymerwachse nach Anspruch 1, **dadurch gekennzeichnet, dass** R¹ in Formel I und R⁴ in Formel II jeweils gleich sind.

3. Ethylenterpolymerwachse nach Anspruch 1 oder 2, **dadurch gekennzeichnet, dass** sie eine Schmelzeviskosität ν bis zu 70.000 mm²/s aufweisen, gemessen bei 120°C.

4. Ethylenterpolymerwachse nach einem der vorangehenden Ansprüche, **dadurch gekennzeichnet, dass** es sich um statistische Terpolymere handelt.

5. Ethylenterpolymerwachse nach Anspruch 1 bis 3, **dadurch gekennzeichnet, dass** sie mindestens zwei verschiedene Carbonsäuren der allgemeinen Formel II als Monomerbausteine enthalten.

6. Verfahren zur Herstellung von Ethylenterpolymerwachsen nach einem der Ansprüche 1 bis 5, **dadurch gekennzeichnet, dass** man Ethylen, mindestens einen Ester der allgemeinen Formel I und mindestens eine Carbonsäure der allgemeinen Formel II miteinander bei Drücken von 500 bis 4000 bar und Temperaturen von 170 bis 300°C polymerisiert.

7. Wässrige Dispersionen, enthaltend ein oder mehrere Ethylenterpolymerwachse nach einem der Ansprüche 1 bis 6.

8. Verwendung von wässrigen Dispersionen nach Anspruch 7 als Komponente in Bodenpflegemitteln.

9. Bodenpflegemittel, enthaltend wässrige Dispersionen nach Anspruch 7.

10. Verwendung von Ethylenterpolymerwachsen nach einem der Ansprüche 1 bis 6 als Komponente in Lederhilfsmitteln.

11. Lederhilfsmittel, enthaltend Ethylenterpolymerwachse nach einem der Ansprüche 1 bis 6.

12. Verwendung von Ethylenterpolymerwachsen nach einem der Ansprüche 1 bis 6 als Komponente von Bauchemikalien.

13. Bauchemikalien, enthaltend Ethylenterpolymerwachse nach einem der Ansprüche 1 bis 6.

14. Verwendung von Ethylenterpolymerwachsen nach einem der Ansprüche 1 bis 6 als Dispergierhilfsmittel für die Dispergierung hydrophober Stoffe in wässrigen Medien.
